# EUROPEAN PATENT SPECIFICATION

(11) **EP 3 359 388 B1**
(45) Date of publication and mention of the grant of the patent: **15.01.2020**
(21) Application number: 16781155.3
(22) Date of filing: 04.10.2016
(51) Int. Cl.: B42D 25/23, B42D 25/455, B42D 25/24, B42D 25/324, B32B 27/36, B32B 37/06, B32B 37/18, B32B 38/14, B32B 3/26, B42D 25/351, B42D 25/46, B32B 27/08

(54) **A METHOD OF MANUFACTURING A SECURITY SHEET AND A SECURITY SHEET**
VERFAHREN ZUR HERSTELLUNG EINES SICHERHEITSPAPIERS UND SICHERHEITSPAPIER
PROCÉDÉ DE FABRICATION D'UNE FEUILLE DE SÉCURITÉ ET FEUILLE DE SÉCURITÉ

(30) Priority: 05.10.2015 GB 201517551
(43) Date of publication of application: 15.08.2018
(73) Proprietor: De La Rue International Limited, Basingstoke, Hampshire RG22 4BS (GB)
(72) Inventor: SUGDON, Matthew, Basingstoke Hampshire RG22 4BS (GB); PRACHAR, Michael, Basingstoke Hampshire RG22 4BS (GB); DIXON, Mark, Basingstoke Hampshire RG22 4BS (GB)
(74) Representative: Boult Wade Tennant LLP
(86) International application number: PCT/GB2016/053081
(87) International publication number: WO 2017/060686

(56) References cited:
- US-A- 3 897 964
- US-A- 4 597 814

## Description

The present invention is directed towards a method of manufacturing a security sheet for displaying personal data and a security sheet formed by such a method. The present disclosure is also directed towards a security document comprising such a security sheet and an apparatus for manufacturing the security sheet.

Security documents and booklets, such as passports, passbooks, identification documents, certificates, licences, cheque books and the like commonly comprise one or more security pages on which information, particularly personal data, is provided. For example, a passport booklet typically comprises a cover and a plurality of internal visa pages therebetween. Typically the visa pages are made from paper having a grammage of around 85 gsm and are sewn together along a stitch line. The cover is adhered to the outside of the visa pages and thereby protects the stitch line.

At least one security sheet or data page is provided in the booklet and is usually the second or the penultimate page, typically located between one of the visa pages and the cover. The security sheet contains the personal data and is generally overlaid by a layer of polymer laminate, usually applied as a film or lacquer. This layer helps protect the data and prevent counterfeiting and fraudulent alteration. The security sheet may be formed from a fibrous substrate and may comprise security features, such as watermarks, laser perforations, security fibres, security threads, security print and the like.

Alternatively, the data page may be formed from a sheet comprising a plastic, which is typically polycarbonate. Plastic sheets are more durable than fibrous substrate data pages and are resistant to delamination by a counterfeiter. During manufacture a number of thin plastic layers are laid over one another and fused together, thereby forming a thicker plastic sheet. The most common method of fusing the thinner plastic layers together involves placing them in between a "sandwich" of steel or brass laminating plates. A number of such sandwiches are stacked on top of each other and heat is applied to the top and bottom of the stack. The heat is transferred through the thinner plastic layers and laminating plates such that the thinner plastic strips fuse together, thereby forming a plastic sheet within each sandwich. A low temperature is then applied to the top and bottom of the stack to cool and harden the plastic sheets. However, such a method is relatively time inefficient as each heating and cooling cycle lasts for around thirty minutes. Furthermore, it can lead to uneven fusing and quality of the plastic sheets due to varying temperature and pressure distribution throughout the stack. This is caused by the laminating plates closer to the top and bottom of the stack usually being hotter (during heating) or colder (during cooling) than those in the middle of the stack.

An alternative, semi-continuous, method of manufacturing plastic security sheets for security documents is disclosed in US-B-6669813. The thin plastic layers are brought together before being incrementally conveyed between two opposing continuous belts through a series of heating and cooling devices. A section of the thin plastic layers is initially kept stationary by the continuous belts and the layers are heated and pressed together under pressure by the heating devices, such that they fuse into a plastic sheet. After a certain amount of time, typically less than a minute, the continuous belts move the section to between the cooling devices where it is cooled and pressure is again applied, typically for less than a minute. The resulting plastic sheets are substantially uniform in quality.

A plastic data page may comprise various security features, such as UV responsive arrangements, optically variable features, windowed or transparent features, laser-perforations, laser markings and tactile features. However, it is not usually possible to include some of the security features in a plastic security sheet which can be included in a fibrous substrate security sheet (such as watermarks). Furthermore, the manufacture of plastic security sheets using the semi-continuous method described above presents challenges when attempting to incorporate security features. US-A-2011/0226408 describes the production of tactile microstructures on the surface of the plastic strip using the semi-continuous manufacturing method by incorporating a profile on the surface of the continuous belts. During the heating and cooling processes the profile embosses a microstructure onto the plastic strip. However, the microstructure is only distinguishable from the rest of the plastic strip by virtue of its raised profile above the surface.

Patent document US 4,597,814 A discloses a method of manufacturing a security sheet according to the preamble of claim 1.

An object of the present invention is to provide a security sheet having improved security features and a method of manufacturing such a security sheet. A further object is to provide an apparatus suitable for manufacturing such a security sheet in a semi-continuous method.

The present invention therefore provides a method of manufacturing a security sheet for displaying personal data, the method comprising the steps of: heating a plastic substrate to an at least softened state; and applying a resin to a first and/or second outer surface of the at least softened plastic substrate such that the resin fuses with the plastic substrate to form at least one raised structure.

The security sheet therefore contains a highly durable and distinguishable security feature in the form of the raised structure. In particular, as the raised structure is integral with the plastic substrate it cannot easily be removed or adapted by a counterfeiter.

Preferably a colourant is applied with the resin to the first and/or second outer surface and an ink may be applied to the first and/or second outer surface, the ink comprising the resin and the colourant. The ink may comprise at least one of flexographic ink, intaglio ink, gravure ink, offset printing ink, inkjet ink, optically variable ink, optically variable magnetic ink, machine readable ink and inks comprising materials which react to external stimuli. In particular, the ink may comprise at least one of fluorescent, phosphorescent, infrared absorbing, thermochromic, photochromic, magnetic, electrochromic, conductive and piezochromic materials.

Further preferably the resin and/or the plastic substrate comprise a thermoplastic polymer. The plastic substrate may comprise polycarbonate, polyethylene, polypropylene and/or polyvinyl chloride. The resin may comprise at least one of a cellulosic, vinyl, polyester, polyurethane, acrylic and polyamide polymer.

Pressure is preferably applied to the plastic substrate simultaneously to the heating to the at least softened state. The plastic substrate is preferably heated and pressurised to at least a Vicat softening point of the plastic substrate. The Vicat softening point of the plastic substrate may be that defined by any of the methods of the ISO 306 or ASTM D 1525 standards.

In addition, heat and pressure are preferably applied to the resin during the application step. In particular, the resin may be heated and pressurised to at least a Vicat softening point of the resin. The Vicat softening point of the resin is preferably at a lower temperature to that of the Vicat softening point of the plastic substrate.

In one embodiment the method further comprises forming a latent image forming arrangement, the latent image forming arrangement comprising the at least one raised structure.

The method further preferably comprises depositing the resin in at least one recessed profile on a support surface and bringing the support surface into contact with the first and/or second outer surface of the at least softened plastic substrate such that the resin in the at least one recessed profile fuses with the plastic substrate to form the at least one raised structure. The resin is preferably deposited in and around the at least one recessed profile on the support surface and, subsequently, the resin is removed from the support surface apart from in the at least one recessed profile.

Preferably the plastic substrate is formed by arranging a plurality of plastic layers over one another and heating the plurality of plastic layers such that the plurality of plastic layers fuse together. The plurality of plastic layers are preferably heated and fused together simultaneously to the heating of the plastic substrate to the at least softened state and application of the resin. The method further preferably comprises directing the plurality of plastic substrate layers into a laminator, the laminator comprising at least one continuous belt having the support surface, and wherein the heating and applying steps comprise applying at least one heating device of the laminator under pressure to the first and/or second outer surface. The plurality of plastic layers may alternatively be heated and fused together prior to the heating of the plastic substrate to the at least softened state for the application of the resin.

The present invention is further directed to a security sheet for displaying personal data comprising a plastic substrate having first and second outer surfaces, the first and/or second outer surface comprising at least one raised structure, said at least one raised structure comprising a resin fused with the plastic substrate.

The plastic substrate is preferably formed from a plurality of plastic layers fused together. The at least one raised structure preferably further comprises a colourant and in preferred embodiments the concentration of colourant continuously decreases across the at least one raised structure to zero in the plastic substrate. The plastic substrate preferably comprises first and second substantially transparent regions at the first and second outer surfaces respectfully. The plastic substrate further preferably comprises an opaque region located between, and separated from, the first and second outer surfaces. Preferably the opaque region is visible as a first colour at the first outer surface and is visible as a second colour at the second outer surface.

The present invention is further directed to a security document comprising the aforementioned security sheet, wherein the security sheet displays personal data of the holder of the security document.

The present invention is further directed to an apparatus for manufacturing at least one security sheet, said apparatus comprising: at least one support surface comprising at least one recessed profile and arranged to receive a plurality of plastic sheets adjacent thereto; at least one reservoir arranged to deposit a resin into the at least one recessed profile; at least one heating device configured to apply heat and pressure to the plurality of plastic sheets adjacent to the at least one support surface, such that the plurality of plastic sheets are fused to one another to form a plastic substrate and the resin is fused with a first and/or second outer surface of the plastic substrate to form at least one raised structure.

Preferably the apparatus further comprises at least one cooling device located downstream of the at least one heating device and configured to cool the plastic substrate.

In a preferred embodiment the method comprises the step of curing the resin. Preferably the curing occurs after the heating step (i.e. after the resin is fused with the plastic substrate). Such a step hardens the resin (and at least one raised structure) and is particularly suitable if the resin is not fully solidified after the heating and cooling steps (i.e. such that it is at least partially soft upon exiting the heating and cooling devices). Preferably the resin is cured by heat, electromagnetic radiation or an electron beam. As a result, preferably the resin of the security sheet comprises a curable material. Furthermore, preferably the apparatus comprises at least one curing device located downstream of the at least one heating device and configured to cure at least the resin.

By way of example only, embodiments of a security sheet, a security document comprising such the security sheet, a method of manufacturing the security sheet and apparatus for manufacturing the security sheet in accordance with the present invention are now described with reference to, and as shown in, the accompanying drawings, in which:
Figure 1 is a plan view of a passport including a security sheet of the present invention;
Figure 2 is a cross-sectional side elevation of the security sheet of Figure 1 through section A-A;
Figure 3 is a cross-sectional side elevation of an apparatus for use in a method of manufacturing the security sheet of Figure 1;
Figure 4 is a cross-sectional side elevation of a plurality of plastic layers prior to being laminated into a plastic substrate by the apparatus of Figure 3;
Figure 5 is a schematic cross-sectional side elevation of a portion of the security sheet of Figure 1 through section A-A showing the materials forming the security sheet;
Figure 6 is a plan view of the top of a plate for use in the manufacturing of a raised structure of the security sheet of Figure 1; and
Figure 7 is a cross-section side elevation of the plate of Figure 6 through section B-B.

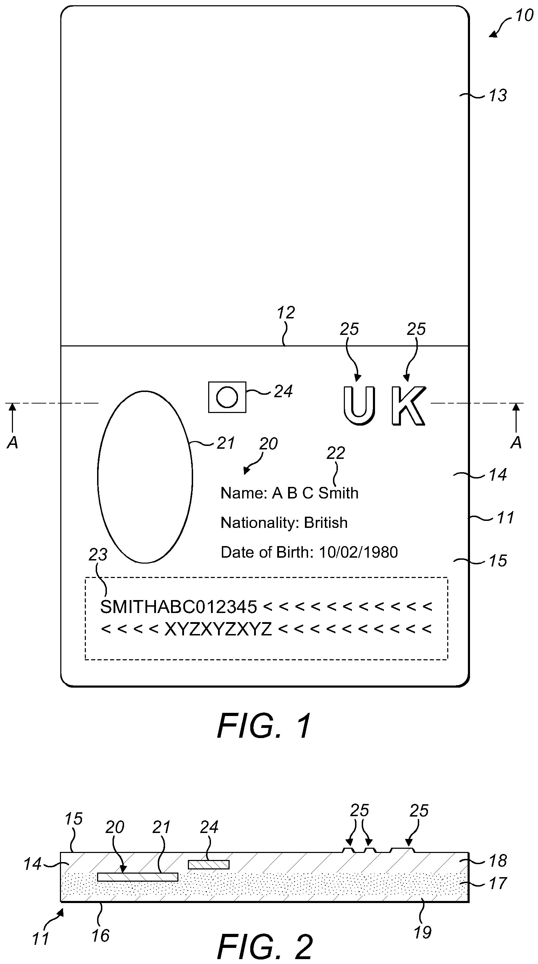

Figure 1 illustrates a security document 10, in this case a passport, comprising a security sheet 11, in this case a data page, sewn along a stitch line 12 to a plurality of visa pages 13 and a cover (not shown). The visa pages 13 are typically made from a fibrous substrate, such as paper, and may include a number of security features, such as security fibres and watermarks.

As shown in further detail in Figure 2, the security sheet 11 comprises a plastic substrate 14 having a first outer surface 15 and a second outer surface 16. Each of the first and second outer surfaces 15, 16 is preferably substantially flat and planar. The plastic from which the plastic substrate 14 is formed may be a thermoplastic polymer, such as polycarbonate, polyester, polyethylene, polypropylene or polyvinyl chloride. Polycarbonate is particularly suitable due to its high durability, its ease of manufacture and the ease with which security features can be incorporated within it.

The security sheet 11 may be substantially rigid or at least semi-rigid, particularly by virtue of the thickness of the plastic substrate 14. The thickness of the plastic substrate 14, which is the distance between the first and second outer surfaces 15, 16, is preferably at least approximately 150 µm and more preferably at least approximately 300 µm. The plastic substrate 14 may be between approximately 300 µm and 1000 µm thick and, for example, may be approximately 800 µm thick.

The plastic substrate 14 may be formed from a single layer or from a plurality of layers which are fused together into a substantially non-laminar or unitary structure. As a result, it cannot be delaminated by a counterfeiter. However, the plastic substrate 14 may not have a uniform structure between the first and second outer surfaces 15, 16 due to the fusing of the plurality of layers (as discussed below) and due to the presence of security features embedded within it. Furthermore, the plastic substrate 14 preferably comprises a substantially opaque region 17 within its thickness and separated from the first and second outer surfaces 15, 16 by first and second substantially transparent regions 18, 19.

A series of laser markings 20 may be located within the plastic substrate 14 in the first transparent region 18 between the opaque region 17 and the first outer surface 15. The series of laser markings 20 may be used to provide personal data of the holder of the security document 10. Such personal data is known as "variable data" or "biographical data" and is provided in the security sheet 11 to identify the specific holder of the security document 10. The Seventh Edition (2015) of Document 9303 ("Machine Readable Travel Documents") issued by the International Civil Aviation Organization (ICAO) describes such biographical data and its contents are incorporated herein by reference. Typically, no two security documents 10 issued by an issuing authority contain the same personal data. The personal data includes, for example, the holder's portrait 21, text 22 providing the holder's name, nationality and date of birth and a machine readable zone 23 containing machine readable data. The personal data may be applied to the plastic substrate 14 by any suitable method, such as printing, as an alternative to, or in addition to, the series of laser markings 20.

A hologram 24 is also preferably located within the first transparent region 18. The hologram 24 may be in the form of non-variable data, in that it represents generic information which is typically present in a number of security documents 10 issued by an issuing authority. For example, the hologram 24 may indicate the issuing authority of the security document 10, or it may be in the form of a pattern or image.

The series of laser markings 20 and hologram 24 are preferably visible when the first outer surface 15 is viewed in reflected light incident upon the first outer surface 15 by virtue of the first transparent region 18 in which they are located. The opaque region 17, although not necessary, may provide a contrasting background for improving the visibility of these security features.

The plastic substrate 14 may also comprise any other suitable security feature, such as UV responsive features, optically variable features, windowed or transparent features, antenna, electronic chips and laser-perforations. The security features may be located elsewhere in the plastic substrate 14 such as in the second transparent region 19 between the opaque region 17 and the second outer surface 16, in the opaque region 17 or at the first and/or second outer surface 15, 16.

The first and/or second outer surfaces 15, 16 comprise at least one raised structure 25. The raised structure 25 may only be machine identifiable, although preferably the raised structure 25 is also tactile in that it has a height about the surrounding region of the first outer surface 15 which renders its presence identifiable to human touch. For example, the raised structure 25 may have a height above the surrounding region and/or plane of the first outer surface 15 of between approximately 5 µm and approximately 200 µm and, more preferably, of between approximately 20 µm and approximately 100 µm. The surrounding region may be defined as a substantially flat area of the first outer surface 15 up to approximately 1 mm, approximately 5 mm or approximately 10 mm from any part of the raised structure 25.

In the illustrated embodiment the first outer surface 15 is provided with two raised structures 25, one in the form of a "U" and the other in the form of a "K", which together form the letters "UK". Any number of raised structures 25 may be provided and they may form any suitable pattern, image, logo, shape and/or indicia. Although it is possible for the raised structure 25 to represent variable data (particularly personal data), in order to improve the speed and cost of production of the security document 10 the at least one raised structure 25 is preferably in a pattern representing non-variable data.

The raised structure 25 comprises a resin and, in a similar manner to the fused plurality of plastic layers 32 forming the plastic substrate 14, the resin is fused with the plastic substrate 14 such that there is no discrete interface between the raised structure 25 and the plastic substrate 14. The raised structure 25 preferably also comprises a colourant, such as a pigment or dye, for providing a colour when viewed in visible or non-visible light. The colourant may be have a substantially opaque colour in visible light and, in particular, the colourant may have a different colour to that of the surrounding region of the first outer surface 15. Alternatively, the colourant may be fluorescent such that the raised structure 25 is visible when viewed in reflected ultraviolet light.

The raised structure 25 therefore provides a security feature which can be detected by a person by touch and/or by eye. Furthermore, it is more secure than the embossed microstructures of US-A-2011/0226408 as it can also be distinctly viewed in visible light (i.e. overtly) or in non-visible light (i.e. covertly). The colour of the raised structure 25 can also be selected such that it more aesthetically appealing than the embossed microstructures of US-A-2011/0226408, which are the same colour as the surface of the plastic strip. The raised structure 25 is also very durable as it cannot be easily separated from the plastic substrate 14 by virtue of its fusing to the plastic substrate 14.

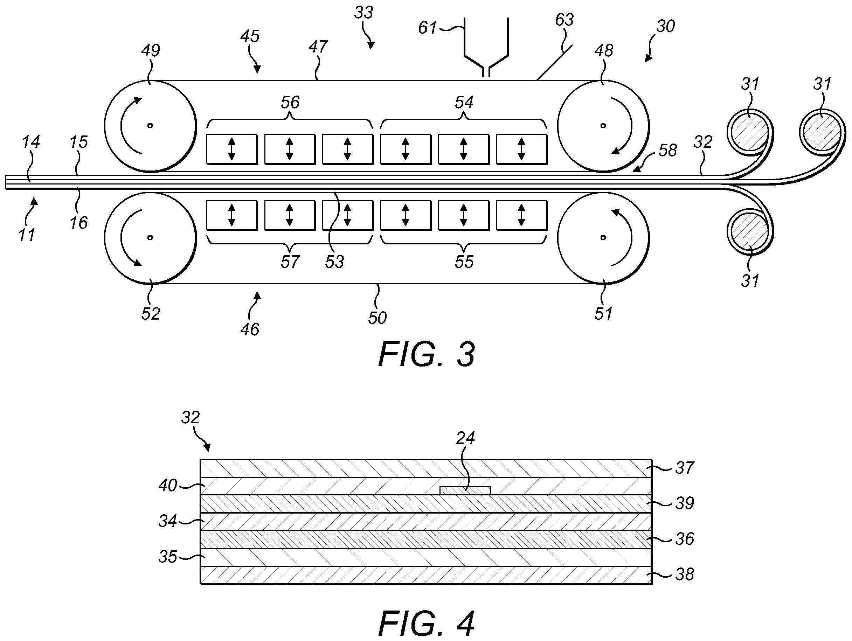

Figure 3 illustrates an embodiment of an apparatus 30 for manufacturing at least one security sheet 11. The apparatus 30 is similar to the devices disclosed in US-B-6669813 and US-A-2011/0226408, the contents of which are incorporated herein by reference. The apparatus 30 comprises a plurality of feeders 31 for feeding a plurality of plastic layers 32 laid over one another into a laminator 33. The laminator 33 fuses the plurality of plastic layers 32 together to form the plastic substrate 14 by applying heat and pressure. The laminator 33 also applies at least one raised structure 25 to the plastic substrate 14. The plastic substrate 14 may subsequently be cut into a plurality of security sheets 11.

The laminator 33 comprises first and second continuous belts 45, 46 which rotate in opposite directions. The first continuous belt 45 comprises a first support surface 47 extending around first inlet and outlet drums 48, 49. The second continuous belt 46 comprises a second support surface 50 extending around second inlet and outlet drums 51, 52. The first and second support surfaces 47, 50 are substantially adjacent to one another over an elongate laminating region 53 for receiving and pressurising the plurality of plastic layers 32 therebetween. Opposing heating devices 54, 55 are located adjacent to the first and second inlet drums 48, 51 within each of the first and second continuous belts 45, 46. Opposing cooling devices 56, 57 are located between the heating devices 54, 55 and the first and second outlet drums 49, 52. The heating and cooling devices 54, 55, 56, 57 are operable to move towards and away from the first and second support surfaces 47, 50 and apply pressure to the plurality of plastic layers 32 between them. A plurality of alternating heating and cooling devices 54, 55, 56, 57 may be provided along the length of the laminator 33.

At least one of the first and second continuous belts 45, 46 is intermittently driven to draw the plurality of plastic layers 32 into the laminator 33 through a nip 58 between the first and second inlet drums 48, 51. Initially a region of the plurality of plastic layers 32 is moved between the heating devices 54, 55. The heating devices 54, 55 move towards the first and second support surfaces 47, 50 to heat and pressurise the region of plurality of plastic layers 32 to form the plastic substrate 14. After a set period of time, typically less than a minute, the heating devices 54, 55 move away from the first and second support surfaces 47, 50 and the first and/or second continuous belt 45, 46 is driven to move the region to between the cooling devices 56, 57. The cooling devices 56, 57 move towards the first and second support surfaces 47, 50 and cool and pressurise the plastic substrate 14 in order to maintain its structure. This heating, cooling and pressure application process is repeated along the plurality of alternating heating and cooling devices 54, 55, 56, 57 until the fully formed plastic substrate 14 exits the laminator 33.

Figure 4 illustrates a suitable structure for the plurality of plastic layers 32 prior to entering the laminator 33 and after being positioned to overlie one another. The plurality of plastic layers 32 is preferably capable of forming a plurality of security sheets 11, although only a portion of the plurality of plastic layers 32 for forming a single security sheet 11 is shown in Figure 4. The plurality of plastic layers 32 preferably comprises first and second opaque layers 34, 35, which are typically white and/or opaque, and an inlay 36 therebetween. Graphical information, colours and/or patterns may be printed on the outer surfaces of the first and second opaque layers 34, 35. Electronic chips and antenna or the like may be located within the inlay 36 or first and second opaque layers 34, 35. Substantially transparent first and second overlays 37, 38 are located at the outer most sides of the plurality of plastic layers 32 and form the first and second outer surfaces 15, 16 of the plastic substrate 14.

First and second intermediate layers 39, 40 for holding security features are provided between the first opaque layer 34 and the first overlay 37. In particular, the first intermediate layer 39 may be substantially opaque and located adjacent to the first opaque layer 34. The first intermediate layer 39 is arranged to be laser marked with the personal data through the first outer surface 15 of the plastic substrate 14. For example, the first intermediate layer 39 may comprise a laser markable additive, such as by being carbon enriched. The second intermediate layer 40 is located between the first overlay 37 and the first intermediate layer 39, is substantially transparent and includes the hologram 24 therein or on its surface. In other embodiments any suitable number of intermediate layers, on either side of the first and second opaque layers 34, 35, may be used in order to provide different security features.

Each of the plurality of plastic layers 32 may be between approximately 0.05 mm thick and approximately 3 mm thick. Each of the plastic layers comprises the plastic forming the plastic substrate 14, such as polycarbonate, although they may be formed of different plastics provided that they are able to fuse together.

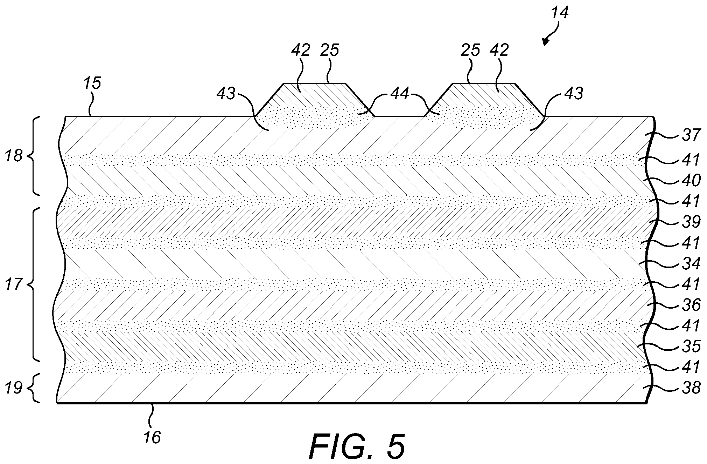

During the heating process each of the plurality of plastic layers 32 becomes at least softened or semi-molten (i.e. a liquid of relatively high viscosity) so that, at the interface of neighbouring layers of the plurality of plastic layers 32, the plastic flows and mixes together. Figure 5 is a schematic of the materials forming the exemplary plastic substrate 14 after fusing of the plurality of plastic layers 32. The first overlay 37 and second intermediate layer 40 form the first transparent region 18. The first and second opaque layers 34, 35, the inlay 36 and the first intermediate layer 39 form the opaque region 17. The second overlay 38 forms the second transparent region 19. The plastic substrate 14 comprises mixed regions 41 formed at positions that correspond to the interfaces between neighbouring layers of the plurality of plastic layers 32. The mixed regions 41 comprise varying concentrations of plastic from neighbouring layers in the plurality of plastic layers 32. As shown in Figure 2, the series of laser markings 20 and hologram 24 (or other security features) are formed at locations in the plastic substrate 14 that substantially correspond to their locations in the plurality of plastic layers 32.

In order to achieve such fusing the heating devices 54, 55 may be suitably controlled to raise the temperature and pressure applied to the plurality of plastic layers 32 to reach the softening point of the plastic. A temperature at which deformation and therefore fusion is possible at a certain pressure can be ascertained using the Vicat softening point test using the ASTM D 1525 and ISO 306 standards. The Vicat softening point may be the temperature at which a specimen is penetrated to a depth of 1 mm by a flat-ended needle with a 1 mm² circular or square cross-section. In a particular example, the Vicat softening point for polycarbonate can be determined using a heating rate of 50°C/hr and a load of 50N. In a further example for polycarbonate, the heating devices 54, 55 may apply a temperature of approximately 180 °C at approximately 8 MPa to the plurality of plastic layers 32 and the cooling devices 56, 57 may apply a temperature of approximately 20 °C to 30 °C and a pressure of 10 MPa to the plurality of plastic layers 32. In yet a further example for polycarbonate, the heating devices 54, 55 may apply a temperature of approximately 180 °C at approximately 1.6 N/mm² to the plurality of plastic layers 32 and the cooling devices 56, 57 may apply a temperature of approximately 20 °C to 30 °C at a pressure of 3.2 N/mm² to the plurality of plastic layers 32. This latter example is particularly appropriate where the region of the plurality of plastic layers 32 between the heating or cooling devices 54, 55, 56, 57 has a surface area of 130 mm by 190 mm.

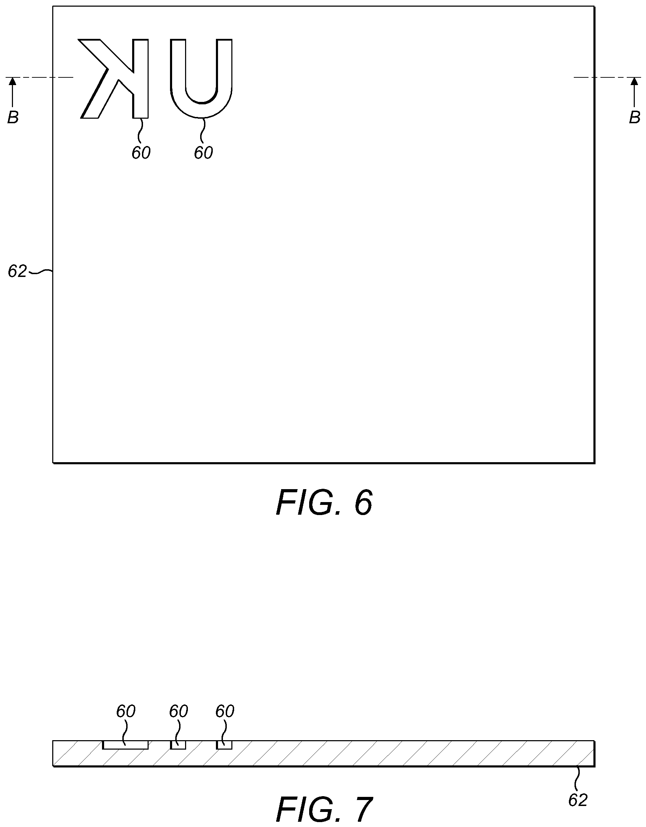

In order to form the at least one raised structure 25, the first support surface 47 preferably comprises at least one recessed profile 60 into which an ink is deposited from a reservoir 61 located adjacent to the top of the first continuous belt 45. The at least one recessed profile 60 is preferably shaped to form the desired shape of the raised structure 25 on the plurality of plastic layers 32. The first support surface 47 may comprise at least one plate 62, as illustrated in Figures 6 and 7, into which the at least one recessed profile 60 is engraved. The plate 62 and first support surface 47 need to be sufficiently flexible to pass around the first inlet and outlet drums 48, 49. For example, the plate 62 may be between approximately 700 µm and approximately 1 mm thick and the at least one recessed profile 60 may be between approximately 5 µm and approximately 100 µm deep. The first support surface 47 comprises a series of plates 62 located around it such that a plurality of raised structures 25 is provided along the length of the plurality of plastic layers 32 and plastic substrate 14 within the laminator 33.

The ink, which may be in liquid or powder form, comprises the resin for fusing with the plastic substrate 14. The resin may comprise the same plastic as the plastic substrate 14 and plurality of plastic layers 32 and may comprise a thermoplastic, such as polycarbonate, polyester, polyethylene, polypropylene and/or polyvinyl chloride. Alternatively, the resin may comprise a non-adhesive ink binder which has melted and fused with the plastic substrate 14. The plastic of the resin may be selected to have a Vicat softening point which is substantially similar to that of the plastic of the plastic substrate 14 and plurality of plastic layers 32.

The ink preferably further comprises a colourant, which may be a pigment or a dye, to provide a colour to the at least one raised structure 25. The ink may be intaglio ink, flexographic ink, gravure ink, offset printing ink, inkjet ink, optically variable ink and/or optically variable magnetic ink. The ink may also be machine readable and may comprise materials which react to external stimuli, including fluorescent, phosphorescent, infrared absorbing, thermochromic, photochromic, magnetic, electrochromic, conductive and piezochromic materials. In particular, the colourant may comprise a magnetic OVI pigment as disclosed in WO-A-2010/139930. For example, the ink may comprise 50% to 75% solvents (such as alcohols, esters, ketones, glycols and water), 15% to 30% polymers (such as cellulosic, vinyl, polyester, polyurethane, acrylic and polyamide polymers) for forming the resin, 8% to 20% pigments and/or colourants (mineral or organic) and 3% to 5% of other additives. Such a formulation is common in flexo and gravure inks.

Initially the ink is deposited in the at least one recessed profile 60 and around the at least one recessed profile 60 on the first support surface 47. However, before reaching the nip 58, the ink is removed from the first support surface 47 other than in the at least one recessed profile 60 by cleaning means 63. The cleaning means 63 is located downstream of the reservoir 61 and may, for example, comprise a doctor blade having a straight edge which scrapes the first support surface 47. Alternatively the cleaning means 63 may comprise one or more rollers. If in liquid form, the ink needs to be sufficiently viscous that it does not fall from the at least one recessed profile 60 as the first support surface 47 passes around the first inlet drum 48. The liquid solvent of the ink may be evaporated such that only the resin and colourant remain in the at least one recessed profile 60 when passing through the nip 58. However, if the ink is in powdered form, the first support surface 47 may be electrically charged to draw the powder towards it such that it remains within the at least one recessed profile 60 even when facing downwards.

When the heating devices 54, 55 apply heat and pressure to fuse the plurality of plastic layers 32 together into the plastic substrate 14 they will also fuse the ink with the first overlay 37. In particular, the plastic of the first overlay 37 and the resin are heated and pressurised to their Vicat softening points such that they diffuse across the interface between the ink and first overlay 37. The softened resin is pushed into the first overlay 37 and the softened plastic of the first overlay 37 is pushed into the resin located in the at least one recessed profile 60. Preferably the Vicat softening point of the resin is at a lower temperature to that of the plurality of plastic layers 32. Alternatively, if the resin is applied in a powdered form, the pressure may be applied to the resin to solidify it on the plurality of plastic layers 32 without the application of heat. Therefore, as illustrated in Figure 5, the plastic substrate 14 comprises an upper ink region 42, a surface region 43 of plastic from the first overlay 37 and an ink-plastic region 44 joining the ink region 42 to the surface region 43. The concentration of ink, and particularly the colourant, substantially continuously decreases from the ink region 42 and through the ink-plastic region 44 to zero concentration in the surface region 43. If the resin is the same plastic as that of the first overlay 37, the concentration of the plastic substantially continuously decreases from the surface region 43 through the ink-plastic region 44 to the ink region 42.

The raised structure 25 is therefore substantially distinguished from known printing in which the printing ink simply adheres to a plastic surface and is not fused with it. The concentration of ink does not continuously vary across the interface between the ink and plastic surface as in the present invention and, instead, discretely changes from 100% to 0% across the interface. Such printing ink could be easily scratched off the surface of the plastic substrate 14 and thus would not be durable.

After the plastic substrate 14 has exited the laminator 33 it may be subject to further processing, such as the addition of further security features to the first and/or second outer surfaces 15, 16. The plastic substrate 14 may also cut into a plurality of smaller security sheets 11. Each security sheet 11 may then be bound with the visa pages 13 and cover to form a passport as shown in Figure 1 or may be used to form another security document 10. The personal data relating to the holder of the security document 10 may also be laser marked into each security sheet 11.

Various alternatives to those described above also fall within the scope of the present invention. The security document 10 comprising the security sheet 11 may be of any other suitable type, such as a driving licence or identity card. Only a resin, rather than an ink with resin and a colourant, may be applied to the first and/or second outer surface 15, 16 to form at least one raised structure 25. Furthermore, different inks with different colourants may be deposited on different recessed profiles 60 of the first and/or second continuous belts 45, 46 such that different coloured raised structures 25 are formed on the plastic substrate 14.

A plurality of raised structures 25 may be provided on both of the first and second outer surfaces 15, 16 of the plastic substrate 14 of each security sheet 11. The first support surface 47 (particularly each of the plates 62) may therefore comprise a number of different shaped recessed profiles 60. In addition, the second support surface 50 may also comprise at least one recessed profile 60 as described above. The ink may be applied at the nip 58 to the second support surface 50 such that it does not flow or fall out from the at least one recessed profile 60 as it will not be in the recessed profile 60 when facing downwards. Alternatively, the ink may be applied on the underside of the second continuous belt 46. As described above, if the ink is a liquid it may be selected to be sufficiently viscous or, if a powder, the second continuous belt 46 may be charged to hold the powder to it.

Rather than being applied during the fusing of the plurality of plastic layers 32, the ink may be fused with the plastic substrate 14 after it has exited the laminator 33. For example, the formed plastic substrate 14 may be placed in a heated press with the aforementioned plates 62 located adjacent to the first and/or second outer surfaces 15, 16. Ink is deposited in the at least one recessed profile 60 of the plates 62. The press then applies the plates 62 under pressure and heat to the first and/or second outer surfaces 15, 16. The plastic substrate 14 is softened and the ink fuses with the plastic to form the raised structure 25.

The security sheet 11 may also be arranged to form a latent image on the first and/or second outer surface 15, 16. A latent image is a hidden image formed within a relief which becomes visible at certain viewing angles. The at least one raised structure 25 may form a latent image forming arrangement alone or in combination with a further security feature. The further security feature may be an ink, particularly a metallic or intaglio ink, deposited on the plastic substrate 14. In an alternative embodiment, the further security feature comprises at least one secondary raised structure embossed into the first and/or second outer surface, as described in relation to the microstructure of US-A-2011/0226408, adjacent and/or close to at least one raised structure 25. The at least one "primary" raised structure 25 and at least one secondary raised structure are registered to one another at certain viewing angles such that one or more latent images becomes viewable at those viewing angles. The registration may be visible in the shape of the at least one secondary raised structure and at least one primary raised structure 25. Alternatively, the registration may be formed by a combination of the shape of the at least one secondary raised structure and the colour of the at least one primary raised structure 25. Such a latent image would add further security to the security sheet 11.

In a further embodiment the opaque region 17 is visible as a first colour at the first outer surface 15 and as a second colour at the second outer surface 16 when viewed in reflected light. For example, the second opaque layer 35 and first intermediate layer 39 may comprise different additives to form the different colours. Fluorescent additives may be selected such that the different colours are only apparent when the first and/or second outer surfaces 15, 16 are viewed in reflected UV light. The different colours may also be visible in the thickness of the security sheet 11, particularly if the additives are included in the first opaque layer 34 and the inlay 36 and/or if the first and second opaque layers 34, 35, the inlay 36 and/or the first intermediate layer 39 are sufficiently thick. The different colours may be selected to provide a contrast against the colourant and thereby improve the visibility of the at least one raised structure 25.

In yet a further embodiment, the security sheet 11 comprises at least one window and the at least one raised structure 25 is located over the window. The at least one window may be substantially clear (i.e. colourless) and the at least one raised structure 25 may have an opaque colour such that it is visible in the at least one window. In a particular arrangement the at least one window is located at and extends along the edge of the security sheet 11. The opaque region 17 may comprise a shape or the like along its edge such that the at least one window forms a predefined shape. The at least one window may be formed according to the method disclosed in WO-A-2015/104011. Alternatively, the further window(s) may be formed by providing transparent portions of the first and second opaque layers 34, 35, the inlay 36 and/or the first intermediate layer 39.

Furthermore, in any of the examples above machine readable materials could be included in any of plurality of plastic layers 32, at least one raised structure 25 or any other material. Alternatively, they could comprise further machine readable layers or materials. The machine readable materials may contain detectable materials that react to an external stimulus, which may include but are not limited to fluorescent, phosphorescent, infrared absorbing, thermochromic, photochromic, magnetic, electrochromic, conductive and piezochromic materials.

In a further embodiment at least the resin is cured after the heating and cooling processes or after the resin has fused with the plastic substrate 14 and the at least one raised structure 25 formed (the at least one raised structure 25 and/or plastic substrate 14 may also be cured in accordance with this embodiment). This step is preferable when the at least one raised structure 25 exiting the laminator 33 is not fully solidified or is not sufficiently hard. The resin preferably comprises a curable material and the curing hardens the resin such that it becomes more viscous and preferably solid. The curing step comprises applying energy to the resin to effect a chemical reaction, such as cross-linking rather than mere physical solidification (as is experienced by most materials upon cooling).

The apparatus 30 therefore may comprise at least one curing device for hardening at least the resin of the at least one raised structure 25 and the curing device may be located downstream of the laminator 33. The at least one curing device may use radiation to apply energy to cure the resin and may, for example, apply heat, electromagnetic radiation and/or an electron beam. The electromagnetic radiation is preferably ultraviolet (UV) radiation, but may alternative be visible light, infrared radiation or even higher wavelength radiation (such as microwaves). The type of at least one curing device is selected depending upon the curing material in the resin, its absorbance of radiation and the process used.

Examples of suitable curable materials for the resin include UV curable acrylic based clear resins or those based on other compounds such as nitrocellulose. The resin is preferably radiation-curable and may be selected from one of:
a) Free radical cure resins, which may comprise, for example, unsaturated resins or monomers, pre-polymers, oligomers etc. containing vinyl or acrylate unsaturation. Free radical cure resins cross-link through use of a photo initiator activated by a radiation source of the at least one curing device (such as UV); or
b) Cationic cure resins, in which ring opening (e.g. epoxy types) is effected using photo initiators or catalysts which generate ionic entities under a radiation source or the at least one curing device (such as UV). The ring opening is followed by intermolecular crosslinking.

## Claims

1. A method of manufacturing a security sheet (11) for displaying personal data, the method comprising:
heating a plastic substrate (14) to an at least softened state; and **characterised by**
applying a resin to a first and/or second outer surface (15, 16) of the plastic substrate (14) such that the resin fuses with the plastic substrate (14) during the heating step to form at least one raised structure (25).

2. A method as claimed in claim 1 wherein a colourant is applied with the resin to the first and/or second outer surface (15, 16).

3. A method as claimed in claim 2 wherein an ink is applied to the first and/or second outer surface (15, 16), the ink comprising the resin and the colourant.

4. A method as claimed in any one of the preceding claims wherein:
the resin and/or the plastic substrate (14) comprise a thermoplastic polymer;
the plastic substrate (14) comprises polycarbonate, polyethylene, polypropylene and/or polyvinyl chloride; and/or
the resin comprises at least one of a cellulosic, vinyl, polyester, polyurethane, acrylic and polyamide polymer.

5. A method as claimed in any one of the preceding claims wherein:
a pressure is applied to the plastic substrate (14) simultaneously to the heating to the at least softened state;
the plastic substrate (14) is heated to at least a Vicat softening point of the plastic substrate (14);
heat and pressure is applied to the resin during the application step; and/or
the resin is heated to at least a Vicat softening point of the resin.

6. A method as claimed in any one of the preceding claims wherein the method further comprises:
forming a latent image forming arrangement, the latent image forming arrangement comprising the at least one raised structure (25);
depositing the resin in at least one recessed profile (60) on a support surface (47) and bringing the support surface (47) into contact with the first and/or second outer surface (15, 16) of the at least softened plastic substrate (14) such that the resin in the at least one recessed profile (60) fuses with the plastic substrate (14) to form the at least one raised structure (25); and/or
curing the resin.

7. A method as claimed in claim 6 comprising the depositing of resin in at least one recessed profile (60) on the support surface (47) and bringing the support surface (47) into contact with the first and/or second outer surface (15, 16) of the at least softened plastic substrate (14) such that the resin in the at least one recessed profile (60) fuses with the plastic substrate (14) to form the at least one raised structure (25), further wherein the resin is deposited in and around the at least one recessed profile (60) on the support surface and, subsequently, the resin is removed from the support surface (47) apart from in the at least one recessed profile (60).

8. A method as claimed in any one of the preceding claims wherein the plastic substrate (14) is formed by arranging a plurality of plastic layers (32) over one another and heating the plurality of plastic layers (32) such that the plurality of plastic layers (32) fuse together.

9. A method as claimed in claim 8 wherein:
the plurality of plastic layers (32) are heated and fused together simultaneously to the heating of the plastic substrate (14) to the at least softened state and application of the resin; or
the plurality of plastic layers (32) are heated and fused together prior to the heating of the plastic substrate (14) to the at least softened state for the application of the resin.

10. A security sheet (11) for displaying personal data comprising a plastic substrate (14) having first and second outer surfaces (15, 16), the first and/or second outer surface (15, 16) comprising at least one raised structure (25), said at least one raised structure (25) **characterised by** comprising a resin fused with the plastic substrate (14).

11. A security sheet (11) as claimed in claim 10 wherein:
the plastic substrate (14) is formed from a plurality of plastic layers (32) fused together;
the at least one raised structure (25) further comprises a colourant; and/or
the resin comprises a curable material.

12. A security sheet (11) as claimed in claims 10 or claim 11 wherein the plastic substrate (14) comprises:
first and second substantially transparent regions (18, 19) at the first and second outer surfaces (15, 16) respectfully; and/or
an opaque region (17) located between, and separated from, the first and second outer surfaces (15, 16).

13. A security document (10) comprising the security sheet (11) of any one of claims 10 to 12, wherein the security sheet (11) displays personal data of the holder of the security document (10).

14. An apparatus (30) for manufacturing at least one security sheet (11), said apparatus (30) comprising:
at least one support surface (47) comprising at least one recessed profile (60) and arranged to receive a plurality of plastic sheets (32) adjacent thereto;
at least one reservoir (61) arranged to deposit a resin into the at least one recessed profile (60); and **characterised by**
at least one heating device (54, 55) configured to apply heat and pressure to the plurality of plastic sheets (32) adjacent to the at least one support surface (47), such that the plurality of plastic sheets (32) are fused to one another to form a plastic substrate (14) and the resin is fused with a first and/or second outer surface (15, 16) of the plastic substrate (14) to form at least one raised structure (25).

15. An apparatus as claimed in claim 14 further comprising:
at least one cooling device (56, 57) located downstream of the at least one heating device (54, 55) and configured to cool the plastic substrate (14); and/or
at least one curing device located downstream of the at least one heating device (54, 55) and configured to cure at least the resin.

## Patentansprüche

1. Verfahren zur Herstellung eines Sicherheitspapiers (11) zum Anzeigen personenbezogener Daten, wobei das Verfahren Folgendes umfasst:
Erwärmen eines Kunststoffsubstrats (14) auf einen zumindest erweichten Zustand; und
**gekennzeichnet durch** Auftragen eines Harzes auf eine erste und/oder zweite Außenfläche (15, 16) des Kunststoffsubstrats (14), derart dass das Harz während des Erwärmungsschritts mit dem Kunststoffsubstrat (14) verschmilzt, um zumindest eine erhöhte Struktur (25) zu bilden.

2. Verfahren nach Anspruch 1, wobei ein Farbmittel mit dem Harz auf die erste und/oder zweite Außenfläche (15, 16) aufgebracht wird.

3. Verfahren nach Anspruch 2, wobei eine Tinte auf die erste und/oder zweite Außenfläche (15, 16) aufgebracht wird, wobei die Tinte das Harz und das Farbmittel umfasst.

4. Verfahren nach einem der vorangehenden Ansprüche wobei: das Harz und/oder das Kunststoffsubstrat (14) ein thermoplastisches Polymer umfassen; das Kunststoffsubstrat (14) Polycarbonat, Polyethylen, Polypropylen und/oder Polyvinylchlorid umfasst; und/oder das Harz zumindest eines von einem Cellulose-, Vinyl-, Polyester-, Polyurethan-, Acryl- und Polyamidpolymer umfasst.

5. Verfahren nach einem der vorangehenden Ansprüche wobei: ein Druck auf das Kunststoffsubstrat (14) gleichzeitig auf das Erwärmen auf den zumindest erweichten Zustand angewendet wird;
das Kunststoffsubstrat (14) auf zumindest einen Vicat-Erweichungspunkt des Kunststoffsubstrats (14) erwärmt wird;
Wärme und Druck auf das Harz während des Anwendungsschritts angewendet werden; und/oder das Harz auf zumindest einen Vicat-Erweichungspunkt des Harzes erwärmt wird.

6. Verfahren nach einem der vorangehenden Ansprüche, wobei das Verfahren ferner Folgendes umfasst:
Bilden einer latenten Bilderzeugungsanordnung, wobei die latente Bilderzeugungsanordnung die zumindest eine erhöhte Struktur (25) umfasst;
Abscheiden des Harzes in zumindest einem vertieften Profil (60) auf einer Trägerfläche (47) und in Kontakt bringen der Trägerfläche (47) mit der ersten und/oder zweiten Außenfläche (15, 16) des zumindest erweichten Kunststoffsubstrats (14), derart dass das Harz in dem zumindest einen vertieften Profil (60) mit dem Kunststoffsubstrat (14) verschmilzt, um die zumindest eine erhöhte Struktur (25) zu bilden; und/oder Härten des Harzes.

7. Verfahren nach Anspruch 6, umfassend Abscheiden von Harz in zumindest einem vertieften Profil (60) auf der Trägerfläche (47) und in Kontakt bringen der Trägerfläche (47) mit der ersten und/oder zweiten Außenfläche (15, 16) des zumindest erweichten Kunststoffsubstrats (14), derart dass das Harz in dem zumindest einen vertieften Profil (60) mit dem Kunststoffsubstrat (14) verschmilzt, um die zumindest eine erhöhte Struktur (25) zu bilden, ferner, wobei das Harz in und um das zumindest eine vertiefte Profil (60) auf der Trägerfläche abgeschieden wird und anschließend das Harz von der Trägerfläche (47), abgesehen von dem zumindest einen vertieften Profil (60), entfernt wird.

8. Verfahren nach einem der vorangehenden Ansprüche, wobei das Kunststoffsubstrat (14) durch Anordnen einer Vielzahl von Kunststoffschichten (32) übereinander und Erwärmen der Vielzahl von Kunststoffschichten (32) derart, dass die Vielzahl von Kunststoffschichten (32) miteinander verschmilzt, gebildet wird.

9. Verfahren nach Anspruch 8, wobei:
die Vielzahl von Kunststoffschichten (32) gleichzeitig mit dem Erwärmen des Kunststoffsubstrats (14) auf den zumindest erweichten Zustand und Auftragen des Harzes erwärmt und miteinander verschmolzen wird; oder
die Vielzahl von Kunststoffschichten (32) erwärmt und miteinander verschmolzen wird, bevor das Kunststoffsubstrat (14) auf den zumindest erweichten Zustand zum Auftragen des Harzes erwärmt wird.

10. Sicherheitspapier (11) zum Anzeigen personenbezogener Daten, umfassend ein Kunststoffsubstrat (14) mit ersten und zweiten Außenflächen (15, 16), wobei die erste und/oder zweite Außenfläche (15, 16) zumindest eine erhöhte Struktur (25) umfasst, wobei die zumindest eine erhöhte Struktur (25) **dadurch gekennzeichnet ist, dass** sie ein mit dem Kunststoffsubstrat (14) verschmolzenes Harz umfasst.

11. Sicherheitspapier (11) nach Anspruch 10, wobei:
das Kunststoffsubstrat (14) aus einer Vielzahl von miteinander verschmolzenen Kunststoffschichten (32) gebildet ist;
die zumindest eine erhöhte Struktur (25) ferner ein Farbmittel umfasst; und/oder das Harz ein härtbares Material umfasst.

12. Sicherheitspapier (11) nach Anspruch 10 oder Anspruch 11, wobei das Kunststoffsubstrat (14) Folgendes umfasst:
erste und zweite im Wesentlichen transparente Bereiche (18, 19) auf der ersten bzw. zweiten Außenfläche (15, 16); und/oder
einen opaken Bereich (17), der zwischen, und getrennt von, der ersten und zweiten Außenfläche (15, 16) angeordnet ist.

13. Sicherheitsdokument (10), umfassend das Sicherheitspapier (11) nach einem der Ansprüche 10 bis 12, wobei das Sicherheitspapier (11) personenbezogene Daten des Inhabers des Sicherheitsdokuments (10) anzeigt.

14. Vorrichtung (30) zum Herstellen zumindest eines Sicherheitspapiers (11), wobei die Vorrichtung (30) Folgendes umfasst:
zumindest eine Trägerfläche (47), die zumindest ein vertieftes Profil (60) umfasst und
angeordnet ist, um eine Vielzahl von Kunststoffpapieren (32) daran anschließend aufzunehmen;
zumindest einen Behälter (61), der angeordnet ist, um ein Harz in das zumindest eine vertiefte Profil (60) abzuscheiden; und **gekennzeichnet durch** zumindest eine Heizvorrichtung (54, 55), die konfiguriert ist, um Wärme und Druck auf die Vielzahl von Kunststoffpapieren (32) im Anschluss an die zumindest eine Trägerfläche (47) anzuwenden, derart, dass die Vielzahl von Kunststoffpapieren (32) miteinander verschmolzen werden, um ein Kunststoffsubstrat (14) zu bilden, und das Harz mit einer ersten und/oder zweiten Außenfläche (15, 16) des Kunststoffsubstrats (14) verschmolzen wird, um zumindest eine erhöhte Struktur (25) zu bilden.

15. Vorrichtung nach Anspruch 14, ferner umfassend:
zumindest eine Kühlvorrichtung (56, 57), die stromabwärts der zumindest einen Heizvorrichtung (54, 55) angeordnet und konfiguriert ist, um das Kunststoffsubstrat (14) zu kühlen; und/oder zumindest eine Härtungsvorrichtung, die stromabwärts der zumindest einen Heizvorrichtung (54, 55) angeordnet und konfiguriert ist, um zumindest das Harz zu härten.

## Revendications

1. Procédé de fabrication d'une feuille de sécurité (11) pour afficher des données personnelles, le procédé comprenant l'étape consistant à :
chauffer un substrat en plastique (14) jusqu'à un état au moins ramolli ; et **caractérisé par** l'étape consistant à
appliquer une résine sur une première et/ou seconde surface extérieure (15, 16) du substrat en plastique (14) de telle sorte que la résine fusionne avec le substrat en plastique (14) pendant l'étape de chauffage pour former au moins une structure en relief (25).

2. Procédé selon la revendication 1, dans lequel un colorant est appliqué avec la résine sur la première et/ou la seconde surface extérieure (15, 16).

3. Procédé selon la revendication 2, dans lequel une encre est appliquée sur la première et/ou la seconde surface extérieure (15, 16), l'encre comprenant la résine et le colorant.

4. Procédé selon l'une quelconque des revendications précédentes, dans lequel :
la résine et/ou le substrat en plastique (14) comprend un polymère thermoplastique ;
le substrat en plastique (14) comprend du polycarbonate, du polyéthylène, du polypropylène et/ou du polychlorure de vinyle ; et/ou
la résine comprend au moins l'un d'un polymère cellulosique, vinylique, polyester, polyuréthane, acrylique et polyamide.

5. Procédé selon l'une quelconque des revendications précédentes, dans lequel :
une pression est appliquée au substrat en plastique (14) simultanément au chauffage jusqu' l'état au moins ramolli ;
le substrat en plastique (14) est chauffé jusqu'à au moins un point de ramollissement Vicat du substrat en plastique (14) ;
une chaleur et une pression sont appliquées à la résine pendant l'étape d'application ; et/ou
la résine est chauffée jusqu'au moins un point de ramollissement Vicat de la résine.

6. Procédé selon l'une quelconque des revendications précédentes, dans lequel le procédé comprend en outre les étapes consistant à :
former un agencement de formation d'image latente, l'agencement de formation d'image latente comprenant la au moins une structure en relief (25) ;
déposer la résine dans au moins un profil évidé (60) sur une surface de support (47) et amener la surface de support (47) en contact avec la première et/ou la seconde surface extérieure (15, 16) du substrat en plastique au moins ramolli (14) de sorte que la résine dans le au moins un profilé évidé (60) fusionne avec le substrat en plastique (14) pour former la au moins une structure en relief (25) ; et/ou
durcir la résine.

7. Procédé selon la revendication 6, comprenant le dépôt de résine dans au moins un profil évidé (60) sur la surface de support (47) et la mise en contact de la surface de support (47) avec la première et/ou la seconde surface extérieure (15, 16) du substrat en plastique au moins ramolli (14) de sorte que la résine dans le au moins un profilé évidé (60) fusionne avec le substrat en plastique (14) pour former la au moins une structure en relief (25), dans lequel la résine est déposée dans et autour du au moins un profilé évidé (60) sur la surface de support et, ensuite, la résine est retirée de la surface de support (47) loin de l'intérieur du au moins un profil évidé (60).

8. Procédé selon l'une quelconque des revendications précédentes, dans lequel le substrat en plastique (14) est formé en agençant une pluralité de couches de plastique (32) les unes sur les autres et en chauffant la pluralité de couches de plastique (32) de telle sorte que les couches de plastique (32) fusionnent ensemble.

9. Procédé selon la revendication 8, dans lequel :
la pluralité de couches de plastique (32) sont chauffées et fusionnées ensemble simultanément au chauffage du substrat en plastique (14) jusqu'à l'état au moins ramolli et à l'application de la résine ; ou
la pluralité de couches de plastique (32) sont chauffées et fusionnées ensemble avant le chauffage du substrat en plastique (14) à l'état au moins ramolli pour l'application de la résine.

10. Feuille de sécurité (11) pour afficher des données personnelles comprenant un substrat en plastique (14) ayant des première et seconde surfaces extérieures (15, 16), la première et/ou la seconde surface extérieure (15, 16) comprenant au moins une structure en relief (25), ladite au moins une structure en relief (25) **caractérisée en ce qu'**elle comprend une résine fusionnée avec le substrat en plastique (14).

11. Feuille de sécurité (11) selon la revendication 10, dans laquelle :
le substrat en plastique (14) est formé d'une pluralité de couches de plastique (32) fusionnées ensemble ;
la au moins une structure en relief (25) comprend en outre un colorant ; et/ou
la résine comprend un matériau durcissable.

12. Feuille de sécurité (11) selon la revendication 10 ou la revendication 11, dans laquelle le substrat en plastique (14) comprend :
des première et seconde régions sensiblement transparentes (18, 19) au niveau des première et seconde surfaces extérieures (15, 16), respectivement ; et/ou
une région opaque (17) située entre les première et seconde surfaces extérieures (15, 16), et séparée de celles-ci.

13. Document de sécurité (10) comprenant la feuille de sécurité (11) selon l'une quelconque des revendications 10 à 12, dans lequel la feuille de sécurité (11) affiche des données personnelles du détenteur du document de sécurité (10).

14. Appareil (30) pour fabriquer au moins une feuille de sécurité (11), ledit appareil (30) comprenant :
au moins une surface de support (47) comprenant au moins un profilé évidé (60) et agencée pour recevoir une pluralité de feuilles de plastique (32) adjacentes à celle-ci ;
au moins un réservoir (61) agencé pour déposer une résine dans le au moins un profilé évidé (60) ; et **caractérisé par**
au moins un dispositif de chauffage (54, 55) configuré pour appliquer une chaleur et une pression à la pluralité de feuilles de plastique (32) adjacentes à la au moins une surface de support (47), de sorte que la pluralité de feuilles de plastique (32) soient fusionnées les unes aux autres pour former un substrat en plastique (14) et la résine soit fusionnée avec une première et/ou une seconde surface extérieure (15, 16) du substrat en plastique (14) pour former au moins une structure en relief (25).

15. Appareil selon la revendication 14, comprenant en outre :
au moins un dispositif de refroidissement (56, 57) situé en aval du au moins un dispositif de chauffage (54, 55) et configuré pour refroidir le substrat en plastique (14) ; et/ou
au moins un dispositif de durcissement situé en aval du au moins un dispositif de chauffage (54, 55) et configuré pour durcir au moins la résine.
